# EUROPEAN PATENT SPECIFICATION

(11) **EP 4 320 949 B1**
(45) Date of publication and mention of the grant of the patent: **01.07.2026**
(21) Application number: 22799044.7
(22) Date of filing: 26.04.2022
(51) Int. Cl.: H04W 4/02, H04W 4/021, H04W 4/029, H04W 8/24, H04W 64/00, G01S 5/02, H04W 4/08, H04W 88/06

(54) **METHOD AND NETWORK FOR LOCALISING USER EQUIPMENTS**
VERFAHREN UND NETZWERK ZUR LOKALISIERUNG VON BENUTZERGERÄTEN
PROCÉDÉ ET RÉSEAU DE LOCALISATION D'ÉQUIPEMENTS UTILISATEURS

(30) Priority: 05.05.2021 GB 202106408
(43) Date of publication of application: 14.02.2024
(73) Proprietor: Samsung Electronics Co., Ltd., Suwon-si, Gyeonggi-do 16677 (KR)
(72) Inventor: HUNUKUMBURE, Mythri, Staines, Middlesex TW18 4QE (GB); GUTIERREZ ESTEVEZ, David, Staines, Middlesex TW18 4QE (GB)
(74) Representative: Gulde & Partner
(86) International application number: PCT/KR2022/005944
(87) International publication number: WO 2022/235001

(56) References cited:
- EP-A1- 3 680 687
- WO-A1-2020/193853
- WO-A1-2021/006796
- US-A1- 2013 177 006
- US-A1- 2013 177 006
- US-A1- 2019 274 130
- US-A1- 2020 068 355
- HUNUKUMBURE MYTHRI ET AL: "Optimising UWB based Location Tracking in Smartphones through the Support of 5G", 2022 IEEE INTERNATIONAL CONFERENCE ON CONSUMER ELECTRONICS (ICCE), IEEE, 7 January 2022 (2022-01-07), pages 1 - 6, XP034101598, DOI: 10.1109/ICCE53296.2022.9730344

## Description

### [Technical Field]

The present invention relates to localising user equipment, UEs, in a network, for example a 5G New Radio, NR, network.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

3GPP (5G NR) Release 16 provides localization (also known as localising or positioning i.e. geographical positioning) using RAT-dependent positioning schemes to support regulatory and commercial use cases. Location (i.e. positioning) accuracy and latency of the positioning schemes are defined for regulatory (e.g. E911) and commercial use cases, the latter having more demanding targets. For regulatory use cases, a horizontal positioning accuracy better than 50 m for 80% of the UEs and a vertical positioning accuracy better than 5 m for 80% of the UEs, with an end-to-end latency less than 30 s, are targeted. For commercial use cases, a horizontal positioning accuracy better than 3 m (indoors) and 10 m (outdoors) for 80% of the UEs and a vertical positioning accuracy better than 3 m (indoors and outdoors) for 80% of the UEs, with an end-to-end latency less than 1 s, are targeted. EP3680687A1 discloses that a system provides ultra-wideband (UWB) positioning.

### [Disclosure]

### [Technical Problem]

Some applications, for example some commercial use cases, require improved horizontal and/or positional accuracies, for example to handle UEs that are mutually more relatively proximal, such as presented by crowds of people.

Hence, there is a need to improve localisation of user equipments, UEs.

### [Technical Solution]

It is one aim of the present invention, amongst others, to provide a method and a network which at least partially obviates or mitigates at least some of the disadvantages of the prior art, whether identified herein or elsewhere. The invention is set out in the appended set of claims.

A first aspect provides a method of localising user equipment, UEs, in a 5G New Radio, NR, network, comprising a Location Management Function, LMF, and a Next Generation NodeB, gNB, defining a cell, using an ultra wideband, UWB, anchor located in the cell, the method comprising: managing, by the network, interworking with the UWB anchor and/or using a UE capability to communicate in UWB; and localising, via the UWB anchor, a first subset of UEs selected from a set of UEs within the cell.

A second aspect provides an apparatus of a location management function, LMF, for localizing user equipments, UEs, in a 5G New Radio, NR, network comprising a Next Generation NodeB, gNB, defining a cell, the apparatus comprising a transceiver, and a processor coupled with the transceiver; wherein the processor is configured to manage interworking with an ultra wide band, UWB, anchor located in the cell, and localize, via the UWB anchor, a first subset of user equipments, UEs selected from a set of UEs.

### [Description of Drawings]

For a better understanding of the invention, and to show how exemplary embodiments of the same may be brought into effect, reference will be made, by way of example only, to the accompanying diagrammatic Figures, in which:
Figure 1a schematically depicts a network according to an exemplary embodiment, particularly showing 'zone' based localization solution with 5G-NR and UWB integration;
Figure 1b schematically depicts an exemplary reference architecture for 5G system (5GS) location services (LCS);
Figure 2 schematically depicts a method of bulk operation of LCS service request targeting to multiple UEs);
Figure 3 schematically depicts a method of UE capability transfer within LPP (LTE Positioning Protocol);
Figure 4 schematically depicts a method of WiFi interworking as a template for future UWB interworking;
Figure 5 schematically depicts a method of two-way ranging;
Figure 6 schematically depicts a method of staggered simultaneous UWB ranging;
Figure 7 schematically depicts a method according to an exemplary embodiment, particularly showing call flow for the group UE transfer to utilize UWB capability; and
Figure 8 is a block diagram illustrating a structure of a network entity 800 according to an embodiment of the present disclosure.

### [Mode for Invention]

According to the present invention there is provided a method, as set forth in the appended claims. Also provided is network. Other features of the invention will be apparent from the dependent claims, and the description that follows.

### Method

A first aspect provides a method of localising user equipment, UEs, in a 5G New Radio, NR, network, comprising a Location Management Function, LMF, and a Next Generation NodeB, gNB, defining a cell, using an ultra wideband, UWB, anchor located in the cell, the method comprising:
managing, by the network, interworking with the UWB anchor and/ or using a UE capability to communicate in UWB; and
localising, via the UWB anchor, a first subset of UEs selected from a set of UEs within the cell.

In this way, improved horizontal and/or vertical accuracies of the first subset of UEs, for example respective locations or positions thereof, are provided by localising via the UWB anchor, compared with horizontal and/or vertical accuracies of the first subset of UEs provided by localising via the gNB (more generally, an access point) i.e. using 5G NR. In this way, mass, accurate localization may be successfully orchestrated through an integrated 5G NR and UWB solution, in which interworking between the gNB and the UWB anchor is managed by the network and/or using a UE capability to communicate in UWB.

This invention includes architectural modifications to eLCS (enhanced Localization Services) in 5G-NR, where a group UEs may be transferred to UWB in-sync, to undergo finer resolution ranging through UWB. Transferring a group UE's in synch provides many benefits, as detailed below. The invention covers the aspects of initial synchronization, tracking UE's through 5G-NR, decisions on grouping and the actual UE transfer mechanism orchestrated by the LMF (Location Management Function) of 5G-NR. The 5G-NR Localization Service may recognize the UWB capability of the UE and the LMF may decide when to use this capability, based on the UE location and the availability of other UEs with similar capability near the same location, to be transferred to UWB as a group.

In more detail, 3GPP SA2 completed the eLCS (enhanced Location Services) work item in Release 16 and produced related TS 23.273. The phase 2 of the eLCS work is continuing in Release 17, focusing on architectural solutions for Industry IoT (IIoT) networks to be adopted directly in TS 23.273. There is now renewed interest in UWB as a mode for high resolution localization, with many of the high end 5G Smartphones carrying UWB capability. The FiRa consortium is building a UWB localization solution with Bluetooth Low Energy (BLE) as the means for initial device discovery and synchronization. However, this BLE solution has limitations on the number of concurrent devices which can be supported, so for mass localization this FiRa based solution is not adequate. This opens the space for 3GPP (5G-NR) based localization methods, which can handle large volumes of users easily, to work with UWB based localization.

Hence, this invention builds on the concept of integrated 5G-NR and UWB based localization. Orchestrating this joint localization through the 5G-NR eLCS architecture provides many benefits, such as ability to scale easily, the enhanced security and privacy protection and low energy consumption for the devices. 5G-NR localization can support many concurrent users and provide good accuracy, whereas UWB localization can provide very high accuracy to a limited number of users at a time. Some applications (like large scale, controlled entry to a stadium, train station or a theatre) may benefit from this integrated localization. Many new Smartphones support both 5G-NR and UWB based localization.

The invention is based on getting the UWB anchor (access point) synchronized to the over-the-air synchronisation of 5G-NR gNB and the gNB transferring a group of UE's who are in sync to UWB. This transfer could mean simply to use the UWB capability in the UE/ device to conduct localization. The overall control of the eLCS procedure may still be maintained by 5G-NR.

The invention can be effectively used for mass localization situations, where a higher accuracy is also required in certain zones. For example, an automated gate entry solution in a railway station or a sports stadium may have hundreds or thousands of UEs to localize at busy times. The UEs may need very high accuracy in localization only when they are closer to the gate. In these use cases, the 5G-NR localization may be used for initial user discovery, synchronization and coarse tracking, while UWB may be used for fine ranging when UEs are closer to the gate. This invention proposes an effective methodology to transfer the UEs from 5G-NR based to the UWB based localization.

In one example, the method comprises selecting, by the LMF, the first subset of UEs and optionally identifying, by the LMF, a second subset of UEs from the set of UEs and localising, via the gNB, the second subset of UEs. For example, the LMF may identifiy which UEs are to be localized using 5G-NR and which UEs to be handed over to UWB for localization from 5G-NR.

In one example, selecting. by the LMF, the first subset of UEs is based, at least in part, on mutual proximity and/or mutual adjacency thereof. For example, out of the UEs to be handed over to UWB for localization, the LMF may identify a group, which are very close to each other and (also fulfils other requirements of a given use case).

In one example, the method comprises transferring, by the LMF, the first subset of UEs for localising, via the UWB anchor, using a single broadcast message or multiple unicast messages, for example sequential or multiple unicast messages. For example, the LMF may transfer this group to UWB localization, either with a single broadcast message or with multiple unicast messages in very quick succession.

In one example, the method comprises requesting, by the LMF to the first subset of UEs, to respectively activate UWB localising or via a UWB interworking-function of the LMF. For example, the LMF may orchestrate this UE transfer to UWB. For example, the LMF may request the group of UEs to use the UWB capability or drive it through full inter-working in a UWB inter-working function. When requesting UE to activate UWB capability, the LMF may use a RequestCapability message and the UE may respond with a ProvideCapability message for UWB, in accordance with the LTE Positioning Protocol (LPP) specifications for current UE capabilities, for example.

In one example, localising, via the UWB anchor, the first subset of UEs comprises staggered simultaneous ranging of the selected subset of UEs. For example, the UWB may use staggered simultaneous ranging to localize the group of UEs relative to the UWB anchor position.

In one example, interworking with the UWB anchor is included in a Non-3GPP Interworking Function, N3IWF, a Trusted Non-3GPP Gateway Function, TNGF, or an interworking function for UWB. For example, the UWB interworking may be included to the current wireless interworking functions N3IWF or TNGF OR a new interworking function for UWB could be derived.

In one example, the method comprises transferring, by the LMF, the first subset of UEs for localising, via the UWB anchor, based on a predetermined location and/or a predetermined time. For example, this 5G-NR to UWB transfer may happen on an area zone or time zone based scenario, where the UWB provides higher accuracy localization to a fewer number of UEs at a given time.

In one example, the method comprises controlling access at a barrier using the localising of the first subset of UEs. For example, entry of a person, holding or carrying the UE, to a stadium or station, for example, may be controlled using the localization. An example use case is automated gate entry for mass entry.

In one example, the method comprises time synchronisation, by the UWB anchor, with the network, for example with a gNB clock thereof through off the air alignment to 5G-NR PSS and/or SSS.

In one example, the method comprises registering, by the set of UEs (i.e. respectively), for a service based on the respective relative locations, for example for an automated gate service. In one example, the method comprises providing, by the set of UEs (i.e. respectively), privacy consent. In one example, the method comprises indicating, by the set of UEs (i.e. respectively), UWB capability.

In one example, the method comprises requesting, by an LCS client (or an application function: AF) MT-LR (mobile terminated location request) or deferred MT-LR service for a subset of UEs from GMLC (gateway mobile location centre) (i.e. a bulk UE request). In one example, requesting includes multiple QoS, for example for different areas.

In one example, the method comprises performing, by the GMLC, context and/or privacy checks with unified data management (UDM). In one example, the method comprises forwarding, by the GMLC, the bulk UE request to an access and mobility function (AMF). In one example, the method comprises selecting, by the AMF, the relevant (i.e. correct LMF) and forwarding the location request thereto.

In one example, the method comprises instigating, by the LMF, localization through 5G-NR and providing localization results to GMLC, for example until a particular UE reaches a boundary of a UWB zone. In one example, the method comprises confirming or reconfirming, by the LMF, UE capability for UWB.

At S705, has a UE reached a boundary of UWB zone? If no, the flow chart returns to S703. If yes, the flow chart continues to S706.

In one example, the method comprises including, by the LMF, a particular UE in a group (i.e. the first subset) at (or near) a boundary of a UWB zone, if the particular UE has reached the boundary of the UWB zone. In one example, the method comprising instructing, by the LMF, the group to use UWB capability for localization.

In one example, the method comprises providing, by the LMF, a higher accuracy localization response to the GMLC, for forwarding to the LCS client.

In one example, the method comprises activating, by the LCS client, a barrier responsive to receiving the higher accuracy localization response, thereby permitting entry for the group.

In one example, managing, by the network, interworking with the UWB anchor comprises obtaining, by the gNB, respective estimated locations of the set of UEs within the cell. It should be understood that the estimated locations are as conventionally determined by the gNB, for example using 5G NR, having positional accuracies as described previously.

In one example, managing, by the network, interworking with the UWB anchor comprises selecting, via the gNB, a subset of UEs from the set thereof having the respective estimated locations.

In one example, localising, via the UWB anchor, the first subset of UEs selected from the set of UEs within the cell comprises determining, via the UWB anchor, respective relative locations of the selected subset of UEs. It should be understood the relative locations are relative to the UWB anchor i.e. ranging and have improved accuracies compared with the estimated locations. Absolute locations may also be determined, as described below.

In one example, the method comprises registering, by the set of UEs, for a service, such as provided by an LCS client, based on the respective relative locations. For example, the UEs may register for a service requiring higher accuracy localization such as an automated gate service.

In one example, the method comprises transmitting, by the gNB, the obtained respective estimated locations of the set of UEs. For example, the LMF may drive localization through 5G-NR and provide results to GMLC.

In one example, obtaining, by the gNB, the respective estimated locations of the set of UEs, within the cell comprises tracking the estimated locations of the set of UEs, within the cell. For example, the UEs in the first subset i.e. group may be first tracked by 5G-NR, before selection and tracking via the UWB anchor.

In one example, obtaining, by the gNB, the respective estimated locations of the set of UEs, within the cell comprises measuring, by the set of UEs, respective downlink reference signals. For example, the localization measurements in the physical layer may be performed on downlink reference signals (PRS(positioning reference signal) and SSB(synchronization signal block) for OTDoA (observed time difference of arrival) and AoA(angle of arrival) measurements respectively).

In one example selecting, via the gNB, the subset of UEs is in response to the respective estimated locations being at or proximal a pre-determined boundary. For example, once the UEs are closer to the higher accuracy zone boundary, the LMF may request this UWB interworking function to conduct the localization for these multiple UEs through UWB. For example, when the UEs are identified as at or near the border between the UWB tracking 'zone' and the 5G-NR tracking 'zone'.

In one example, the method comprises transmitting, to the selected subset of UEs, respective requests to activate UWB localising. For example, the LMF may request these multiple UEs to use this UWB capability to provide continuous location (tracking) information or the LMF may request this UWB interworking function to conduct the localization for these multiple UEs through UWB. This may include the LMF to issue a RequestCapability message with respect to UWB to the UE, similar to the messages for other positioning capabilities as provided in the LTE Positioning Protocol [6] and the UE to respond with a ProvideCapability message in a similar manner.

In one example, the method comprises activating, by the selected subset of UEs, UWB localising (i.e. a UWB capability thereof) in response to receiving the transmitted respective requests.

In one example, transmitting, to the selected subset of UEs, the respective requests to activate UWB localising comprises transmitting, by the gNB to the selected subset of UEs, the respective requests to activate UWB localising. For example, the LMF may request these multiple UEs to use this UWB capability to provide continuous location (tracking) information.

In one example, transmitting, to the selected subset of UEs, the respective requests to activate UWB localising comprises transmitting, by the UWB anchor point to the selected subset of UEs, the respective requests to activate UWB localising. For example, the LMF may request this UWB interworking function to conduct the localization for these multiple UEs through UWB.

In one example, transmitting, to the selected subset of UEs, the respective requests to activate UWB localising comprises simultaneously transmitting, to the selected subset of UEs, the respective requests to activate UWB localising. For example, these multiple requests may be sent simultaneously or in very quick succession.

In one example, transmitting, to the selected subset of UEs, the respective requests to activate UWB localising comprises successively transmitting, to the selected subset of UEs, the respective requests to activate UWB localising. For example, these multiple requests may be sent simultaneously or in very quick succession.

In one example, determining, via the UWB anchor, the respective relative locations of the selected subset of UEs comprises ranging, by the UWB anchor, of the selected subset of UEs. For example, the FiRa UWB ranging solution uses the PHY and MAC layers of the IEEE 802.15.4z standards [4]. This may be done as two-way ranging (TWR) or one-way ranging (OWR).

In one example, ranging, by the UWB anchor, of the selected subset of UEs comprises staggered simultaneous ranging, by the UWB anchor, of the selected subset of UEs. For example, the staggered simultaneous ranging solution is proposed by Decawave [5], is one implementation solution to increase the time resource usage efficiency.

In one example, determining, via the UWB anchor, the respective relative locations of the selected subset of UEs comprises tracking, by the UWB anchor, the respective relative locations of the selected subset of UEs. For example, the LMF may request these multiple UEs to use this UWB capability to provide continuous location (tracking) information.

In one example, the method comprises transmitting, by the UWB anchor, the determined respective relative locations of the selected subset of UEs. For example, the LMF may provide higher accuracy localization responses to GMLC and onwards to LCS client.

In one example, the method comprises performing an action in response to determining, via the UWB anchor, the respective relative location of a particular UE of the selected subset of UEs. For example, the LCS client may activate the automated gate entry for these UEs.

In one example, performing the action comprises permitting, for example selectively permitting, or denying, for example selectively denying, a service based on the respective relative location of the particular UE. For example, the LCS client may activate the automated gate entry for these UEs.

In one example, performing the action is in response to the respective relative location of the particular UE being at or proximal a pre-determined location. For example, the LCS client may activate the automated gate entry for these UEs.

In one example, the method comprises determining, via the UWB anchor, respective absolute locations of the selected subset of UEs. For example, three UWB anchors (trilateration) may be required to determine absolute locations, for example horizontally and/or vertically. Additionally and/or alternatively, multiple anchors and/or two-way ranging and triangulation by UEs may be used to determine absolute locations, for example horizontally and/or vertically.

### Network

The second aspect provides a 5G New Radio, NR, network comprising a Location Management Function, LMF, a Next Generation NodeB, gNB, defining a cell, an ultra wideband, UWB, anchor located in the cell, and a set of User Equipment, UEs;
wherein the network is configured to manage interworking with the UWB anchor and/ or use a UE capability to communicate in UWB; and
wherein the UWB anchor is configured to localise a first subset of UEs selected from the set of UEs.

The network, the LMF, the gNB, the cell, the UWB anchor, the set of UEs, the interworking, the localising, the first subset of UEs and/or the selecting may be as described with respect to the first aspect.

The network, the LMF, the gNB, the cell, the UWB anchor, the set of UEs and/or the first subset of UEs may be configured to implement any of the steps described with respect to the first aspect.

In one example, the gNB is configured to obtain respective estimated locations of the set of UEs within the cell and select the first subset of UEs from the set thereof having the respective estimated locations.

In one example, the LMF is configured to manage interworking with an ultra wideband, UWB, anchor located in the cell, and localize, via the UWB anchor, a first subset of user equipments, UEs selected from a set of UEs within the cell.

In one example, the UWB anchor is configured to localise the first subset of UEs selected from the set of UEs by determining respective relative locations of the first subset of UEs.

### Definitions

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables.

Although the example embodiments have been described with reference to the components, modules and units discussed herein, such functional elements may be combined into fewer elements or separated into additional elements. Various combinations of optional features have been described herein, and it may be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

In localization and tracking, there are many scenarios where the level of accuracy and the number of UEs/ devices to be tracked vary depending on physical 'zones'. Some examples are in the automated gate entry solutions, where a large group of users would congregate around the entry point, wanting to enter the premises quickly. A UWB based fine ranging solution provided by the FiRa consortium [1] has become prominent recently, where the UWB provides up to 10 cm accuracy and the users may 'walk through' the gate when they have their tickets on the mobile. One limitation with the FiRa solution is that it uses BLE (Bluetooth Low Energy) for the initial device discovery and sync. and this BLE module may handle only around 8 simultaneous users. When there are many users trying to gain entry - this FiRa solution may not cope well.

In contrast, the invention uses 5G-NR in an 'outer zone' centered around the entry gate for localization and tracking users and then transfer them to UWB when they are near an 'inner zone', in the immediate vicinity of the gate. This allows a large number of users to be time synchronized and tracked by 5G-NR in the initial stage and then systematically transfer them to UWB in an efficient manner. This solution may be used at sports stadium, theatres, train and metro stations and many other localities where this automated entry for large crowds needs to be implemented.

The solution is developed on the basis of the UEs having 5G-NR coverage throughout the area and supported by multiple gNBs (5G node B). There may be many use cases with large number of users/devices which may benefit from the proposed solution. For example, entry control for large crowds for sports or music events and in transport hubs like train stations are high in this applicability list. In addition, this solution may be used to monitor social distancing (related to COVID-19, for example) in venues containing indoor and outdoor spaces. In outdoors, the distancing requirement is quite relaxed and 5G-NR may be used to track people through their UEs. When people move indoors, stricter social distancing may be enforced through UWB and our solution may be used in user transfer from 5G-NR to UWB.

The mechanisms of the solution are explained through the sports stadium automated entry use case, but as noted before this is applicable in many other use cases. Closer to the entry gate(s) of the stadium, there may be UWB anchor point(s), which may also receive the 5G-NR radio signals and may also co-ordinate with the 5G-NR core. In the case of a sports stadium, this 5G-NR network may be even a private network operated by (or on behalf of) the stadium management/ professional sports club, and the fans may subscribe to this service of automated gate entry. The 5G-NR network may orchestrate the localization and tracking for this service and use the UWB capability when required. It is only within the high accuracy 'zone' that this 10 cm level of accuracy provided by UWB is needed.

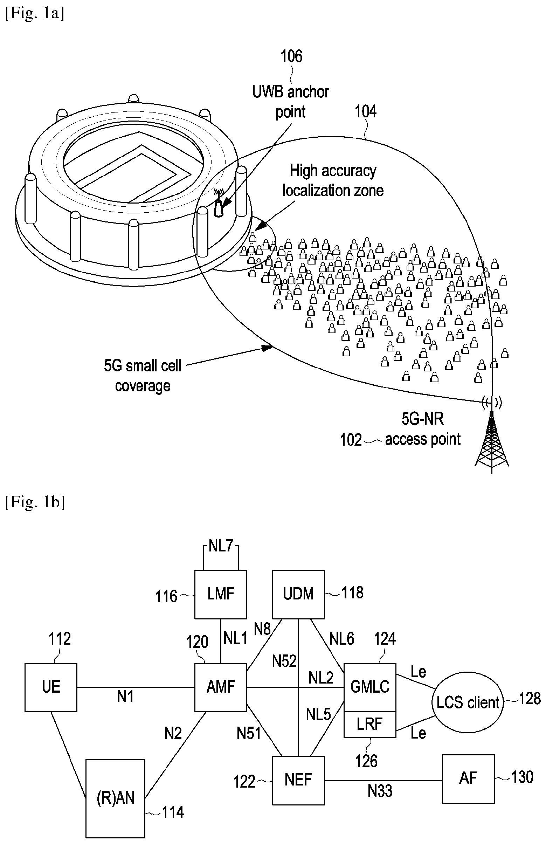

Figure 1a schematically depicts a network according to an exemplary embodiment, particularly showing 'zone' based localization solution with 5G-NR and UWB integration. A conceptualized diagram for this solution framework is provided below in Figure 1a. Although for simplicity, only a single 5G-NR gNB 102 is shown in the diagram, it should be viewed as a network with many gNBs. The basic concept of smaller high accuracy zone 104 near the UWB anchor point 106 and a wider zone with comparatively lower localization accuracy is a core feature of this solution.

Figure 1b schematically depicts an exemplary reference architecture for 5GS location services.

Referring to Figure 1b, the system architecture for 5GS location services may comprises at least one of an access network (AN) 114, at least one LCS client 128, at least one application function (AF) 130, a gateway mobile location centre (GMLC) 124, a location retrieval function (LRF) 126, a user equipment (UE) 112, an unified data management (UDM) 118, an access and mobility function (AMF) 120, a location management function (LMF) 116, or a network exposure function (NEF) 122.

In one embodiment, the AN 114 may be involved in the handling of various positioning procedures including positioning of a target UE (e.g. the UE 112), provision of location related information not associated with a particular target UE and transfer of positioning messages between an AMF or LMF and a target UE. The AN 114 may support determination of location estimates in geographical and/or local co-ordinates.

In one embodiment, location services may be supported for NG-RAN and non-3GPP access.

In one embodiment, the AF 130 and other NF (e.g. the AMF 120, the LMF 116, the NEF 122, or the LRF 126) may access LCS services from the GMLC 124 in the same trust domain (e.g. in the same PLMN(public land mobile network)) using the Ngmlc interface or Event Exposure with location information from an AMF in the same trust domain using the Namf interface.

In one embodiment, the LCS Client 128 may access LCS services from a GMLC 124 (e.g. home GMLC (HGMLC)) using the Le reference point.

In one embodiment, the AF 130 may access LCS services from an NEF using Nnef interface or CAPIF (common API framework) API (application programming interface).

In one embodiment, the GMLC 124 may contain functionality required to support LCS. In one PLMN, there may be more than one GMLC. the GMLC 124 is the first node an external LCS client (e.g. the LCS client 128) accesses in a PLMN (e.g. the Le reference point is supported by the GMLC 124). AFs (e.g. AF 130) and other NF may access the GMLC 124 directly or via the NEF 122. The GMLC 124 may request routing information and/or target UE privacy information from the UDM 118 via the Nudm interface. After performing authorization of the LCS Client 128 or the AF 130 and verifying target UE privacy, the GMLC 124 may forward a location request to either a serving AMF (e.g. the AMF 120) using Namf interface or to a GMLC (not shown) in another PLMN using the Ngmlc interface in the case of a roaming UE.

In one embodiment, the target UE's privacy profile settings may be checked in the UE's home PLMN prior to delivering a location estimate.

In one embodiment, the "Visited GMLC" (VGMLC) is the GMLC 124, which is associated with the serving node of the target UE (e.g. the UE 112).

In one embodiment, the "Home GMLC" (HGMLC) is the GMLC 124 residing in the target UE's home PLMN, which is responsible for the control of privacy checking of the target UE (e.g. the UE 112).

In one embodiment, the LRF 126 may be collocated with the GMLC 124 or separate and is responsible for retrieving or validating location information, providing routing and/or correlation information for a UE which has initiated an IMS (IP multimedia subsystem) emergency session.

In one embodiment, the UE 112 is a target UE that may support positioning. A limited set of UE positioning capabilities may be transferred to the 5G core network during registration of the UE 112. Some of these positioning capabilities may be transferred subsequently to the LMF 116. UE positioning capabilities may also be transferred directly to a location server (e.g. the LMF 116).

In one embodiment, the UDM 118 may contains LCS subscriber LCS privacy profile and routing information. The UDM 118 is accessible from the AMF 120, the GMLC 124 or the NEF 122 via the Nudm interface.

In one embodiment, the AMF 120 may contain functionality responsible for managing positioning for a target UE (e.g. the UE 112) for all types of location request. The AMF 120 may be accessible to the GMLC 124 and the NEF 122 via the Namf interface, to the RAN 114 via the N2 reference point and to the UE 112 via the N1 reference point.

In one embodiment, the LMF 116 may manage the overall co-ordination and scheduling of resources required for the location of the UE 112 that is registered with or accessing 5G core network. The LMF may calculate or verify a final location and any velocity estimate and may estimate the achieved accuracy. The LMF 116 may receive location requests for the UE 112 from the AMF 120 using the Nlmf interface. The LMF 116 may interact with the UE 112 in order to exchange location information applicable to UE assisted and UE based position methods and interacts with the NG-RAN 114, a N3IWF(non-3GPP interworking function) or a TNAN (trusted non-3GPP access network) in order to obtain location information. The LMF 116 may determine the result of the positioning in geographical co-ordinates. If requested and if available, the positioning result may also include the velocity of the UE 112.

In one embodiment, the NEF 112 may provide a means of accessing location services by the AF (130) (e.g. be an external AF or internal AF). The AF 130 may access location services from the NEF 112 using an API. Depending on QoS requirements, the NEF 112 may forward a location request to the GMLC 124 or request an event exposure for location information from the AMF 120 (optionally via the UDM 118). When event exposure via the AMF 120 is used, the NEF 122 may request routing information and/or target UE privacy information from the UDM 118 via the Nudm interface.

In one embodiment, an unified data repository (UDR) may contain privacy data information for target UEs (e.g. the UE 112) and may be updated by a serving AMF (e.g. the AMF 120) via the UDM 118 with new privacy information received from the UE (112).

The main components of the solution are listed below and are detailed below:
1. UE service authorisation and privacy indication;
2. UWB anchor time synchronisation;
3. Efficient tracking of UEs within the 5G-NR zone;
4. Transfer of a group of UEs from 5G-NR to UWB.

### 1. UE service authorization and privacy indication

The users - when they enter the lower accuracy localization zone with their UEs (e.g. the UE 112) - may be queried by the 5G network (this could be the PLMN(Public Land Mobile Network) or a private 5G network) if they would like to use the automatic entry service and authorize being tracked to implement this service. The users who give authorization and location privacy indication (LPI) for this tracking may be registered in the UDM with this LPI and the LCS client or the AF executing this service may request the GMLC to initiate this tracking procedure. The actual localization process execution may be carried out by the LMF (e.g. the LMF 116) and this may be explained below in section A.

### 2. UWB anchor time synchronisation

In the FiRa solution, BLE based initial synchronisation was chosen because the UWB based synchronisation may be energy hungry. 5G-NR based time synchronisation may be based on broadcast PSS (Primary Synchronisation Signal) and SSS (Secondary Synchronisation Signal) and may be scaled to many UEs seamlessly. The UWB anchor is also required to achieve time synchronisation to this over the air signal. For this purpose, the UWB anchor may have to be equipped with a 5G-NR chip capable of reading this PSS and SSS and also a clock signal running at the (or in multiples of) the sampling clock rate for this 5G-NR system.

One requirement for this solution may be that the UEs at the border of the high accuracy zone and the UWB anchor itself may have a single dominant gNB (w.r.t. radio signal strength). The UEs at the boundary may all be connected to this gNB for localization. They may acquire the time synchronisation from this gNB. If the UWB anchor also acquires time synchronisation from this gNB through the PSS and SSS, the timing differences from the UWB anchor and the individual UEs may be a few nano seconds (ns), corresponding to distances of a few metres. This may be ideal for the execution of the staggered simultaneous device ranging, as detailed in section B below.

### 3. Efficient tracking of UEs within the 5G-NR zone

As considering the provision of localisation support for hundreds of users, resource efficient tracking of UEs within 5G-NR is of importance. The localization measurements in the physical layer may be done on downlink reference signals (PRS and SSB for OTDoA and AoA measurements respectively). These are broadcast in the downlink and the increase of UEs does not increase this signalling overhead. However, there may be an increase in the transport signalling, and the service messages between the LMF and the UEs. In this IPR however, we are concerned with the architecture level solutions, i.e. how the LMF orchestrates the localization with the UWB capability. An IPR on improving radio level resource efficiency may be filed separately.

### 4. Transfer of a group of UEs from 5G-NR to UWB

This is a core feature of the IPR and we develop methods for the LMF to transfer a group of UEs from 5G-NR based localization to UWB based localization. The UEs in such a group may be first tracked by 5G-NR and then identified as at or near the border between the UWB tracking 'zone' and the 5G-NR tracking 'zone'. For this mass localization and tracking solution, treating multiple UEs as a group is important from the outset, and we develop features in line with TS 23.273 in section A below.

### A. The LMF driven integrated mass UE tracking solution

The invention proposal is based on the MT-LR or deferred MT-LR localisation requests for a group of UEs, as specified in section 6.8 of TS 23.273 [2]. For a private network like in and around a sports stadium, this service may be offered to registered users with the network. If the users accept the automated gate entry service, their UE details may be registered with the LCS client or the AF that drives this service. For the automated entry to the train or metro station, the users may be asked for their consent to use this service at the time of buying the tickets on-line and then again be registered at the LCS client (e.g. the LCS client 128) of AMF (e.g. the AMF 120). On the event day and time the LCS client may make the bulk operation service request as an MT-LR from the GMLC of the network, or may make it earlier as a deferred MT-LR request.

The UE groups may be allocated a group ID, at the stage these groups are formed in the 5G-NR localisation stage and may be used throughout the UE 'transfer' process for localization through UWB. Thus the 'bulk of UEs' are sub-divided into groups and are allocated group IDs. This group ID could be applied to both UWB interworking and using the UE capability of UWB solution variants. These variants are discussed below in this sub-section.

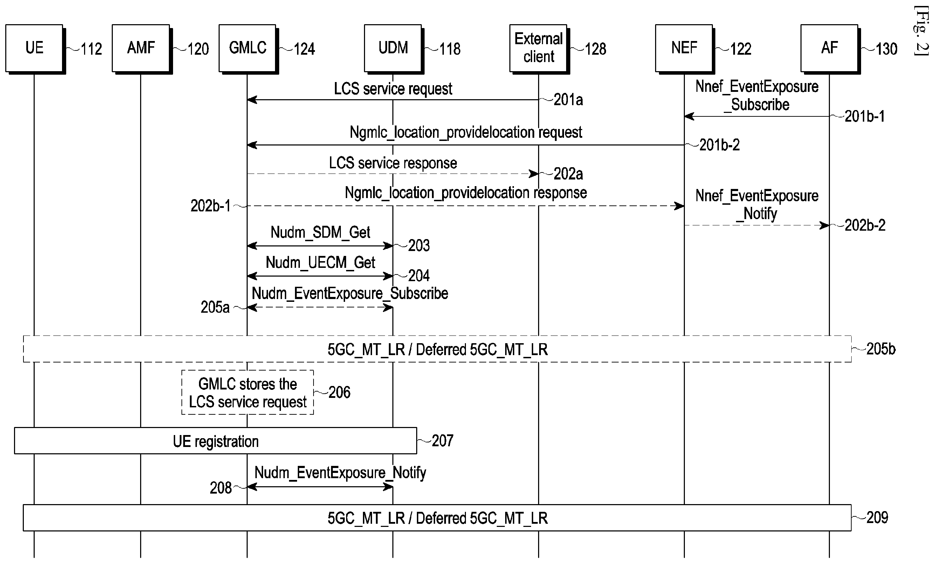

The call flow for this type of bulk operation request is captured in Figure 2 below, from TS 23.273 [2].

Referring to Figure 2, in operations 201a, 201b-1, and 201b-2, the external location services client (e.g. the LCS client 128) or the AF 130 (via the NEF 122) may send a request to the (H)GMLC 124 for a location and optionally a velocity for the target UE (e.g. the UE 112) which may be identified by an GPSI (generic public subscription identifier) or an SUPI (subscription permanent identifier). In one embodiment, the request may include the required quality of service (QoS), supported GAD (geographical area description) shapes, LCS client type and other attributes. The request may be targeting a group of UE identified by a group ID. The NEF 122 or the GMLC 124 may map the external group ID to the list of UE ID (i.e. SUPI) using Nudm_SDM_Get (Group Identifier Translation, External Group Identifier) service operation.

In operation 202, if deferred location is requested, the GMLC 124 may respond to the LCS Client 128 or the AF 130 with an acknowledgment. The GMLC 124 may decide whether completely or partially (i.e. accept part of the UE(s) within the group identified by the group ID in the operation 201) reject the location request. If the GMLC 124 decides to partially reject the location request, the GMLC 124 may respond to the LCS client 128 or the AF 130 with a proper error cause.

In one embodiment, operations 203 to 205 are carried out once per the UE 112.

In operation 203, the GMLC 124 may invoke a Nudm_SDM_Get (LCS privacy, SUPI) service operation towards the UDM 118 to get the UE LCS privacy profile of the target UE 112. The GMLC 124 may check the privacy settings. For the UE 112 whose privacy setting does not allow it to be located, operations 204 and 205 are skipped. The GMLC 124 may also subscribe to and receive notification of UE privacy profile updates.

In operation 204, the GMLC 124 may invoke a Nudm_UECM_Get service operation towards the UDM 118 of the target UE 112 with SUPI of the UE 112. The UDM 118 may return the current serving AMF ID to the GMLC 124.

In operation 205a, if no AMF ID is returned at operation 204.
- if it is a deferred location request and the GMLC 124 supports the storage of the LCS service request for a group of the UE 112, the GMLC 124 may subscribe the UE reachability status to the UDM 118 using Nudm_EventExposure_Subscribe service operation with the data key "SUPI".
- Otherwise, the GMLC 124 may return an appropriate error cause to the LCS client 128 or the AF 130.

In operation 205b, if the UDM 118 returns the current serving AMF ID to the GMLC 124 at the operation 204:
- the GMLC 124 may initiate 5GC_MT_LR procedure (from the operation 204 onwards);
- or the GMLC 124 may initiate Deferred 5GC-MT-LR (mobile terminated location request) Procedure (from the operation 204 onwards), and operation 208 may be skipped.

In operation 206, for the deferred location request, if any UE in the group didn't get its serving AMF ID at the operation 204, the GMLC 124 may store the LCS service request locally if the GMLC 124 supports the storage of the LCS service request for a group of the UE 112. Otherwise, the operation 206 may be skipped.

The following operations may apply to the UEs of the group who was not registered to the network when the LCS service request is received at the GMLC 124.

In operation 207, the UE 112 may perform the registration procedure, during which an AMF (e.g. the AMF 120) is selected to serve the UE 112, and the AMF ID may be stored into the UDM 118.

In operation 208, the UDM 118 may notify the GMLC 124 who had subscribed the UE registration at the operation 205a using Nudm_EventExposure_Notify service operation, which includes "SUPI" and UE registration status.

In operation 209, the GMLC 124 may initiate Deferred 5GC-MT-LR Procedure (from the operation 2 onwards).

In one embodiment, the GMLC 124 may carry out privacy and UE context checking with the UDM 118 and then send the bulk localization requests to the AMF 120. The users (with their UEs (e.g. the UE 112)) may first enter the outer zone of this localization and tracking, which is carried out through 5G-NR. Once the AMF 120 detects one or more registered UEs in this outer zone, the AMF 120 may instruct the LMF 116 to execute the localization and tracking. In one embodiments, these UEs (e.g. the UE 112) may have the UWB capability (this service may be offered to only these UEs) and this capability may be visible to the AMF 120 and the LMF 116.

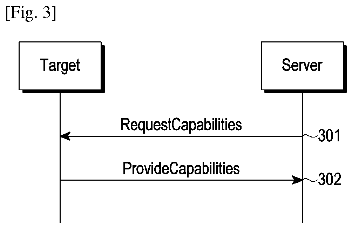

Figure 3 schematically depicts a method of UE capability transfer within LPP (LTE Positioning Protocol) (from [3]).

Referring to Figure 3, in operation 301, a server (e.g. the AMF 120 or the LMF 116) may send a RequestCapabilities message to a target (e.g. the UE 112). In an embodiment, the RequestCapabilities message may include a parameter for requesting the UWB capability of the UE 112. In operation 302, the UE 112 may send ProvideCapabilities including the UWB capability to the AMF 120 or the LMF 116.

The UE capability may be stored in the AMF 120 or the LMF 116 also, which can reduce the time it takes to activate this capability and conduct UWB based localization.

Within the 5G-NR zone, the LMF 116 may carry out the localization and tracking of the UEs (e.g. the UE 112), either individually or as clusters of UEs, using 5G-NR specified localization methods. The required QoS levels for this 'zone' may be pre-defined by the service designers and may be provided by the LCS client 128 or the AF 130. The accuracy QOS level may be within 1 m, which is now achievable by 5G-NR. (Note to IPR Attorney: The UE clustering and tracking as a collective unit is a RAN defined solution and is out of scope for this IPR). The LMF 116 may track the UEs using 5G-NR localization methods until they are closer to the boundary of the high accuracy zone.

The network may use the UE capability transfer procedure (Section 5.1.1) in TS 37.355 [3] to identify the UE capability in using UWB. This may happen well before the UEs are closer to the higher accuracy zone boundary. When the UEs register for this service, this UWB capability may be checked and registered in the network or when the UEs are first detected at the lower accuracy zone, the network may check for this capability. In either mode, the UE capability is requested and obtained by the network as follows.

The LMF 116 may read this UE capability from the network and once it identifies multiple UEs at the boundary of the higher accuracy zone, the LMF 116 may request these multiple UEs to use this UWB capability to provide continuous location (tracking) information. These multiple requests may be sent simultaneously or in very quick succession.

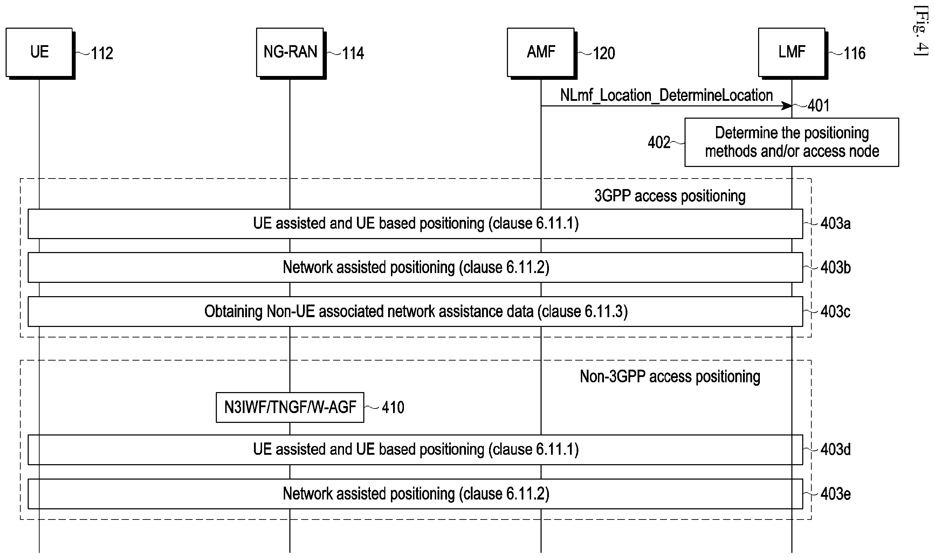

Another possibility is that future 5G-NR may support full interworking with UWB, similar to the interworking it provides today with WiFi. For this, a separate UWB interworking function may be needed and the LMF 116 may need to be able to communicate with this function. Once the UEs are closer to the higher accuracy zone boundary, the LMF 116 may request this UWB interworking function to conduct the localization for these multiple UEs through UWB. An example diagram for WiFi interworking is provided in Figure 4, from TS23.273 [2].

Figure 4 schematically depicts a method of WiFi interworking as a template for future UWB interworking (from [2]). In one embodiment, Figure 4 may refer to a procedure for common positioning procedures when UE is served by the one PLMN.

Referring to Figure 4, in operation 401, the AMF 120 may invoke the Nlmf_Location_DetermineLocation service operation towards the LMF 116 to request the current location of the UE 112, which includes the QoS requirement and UE connectivity state per access type.

In operation 402, the LMF 116 may determine the positioning access type and the positioning method based on the UE/network positioning capability, the QoS requirement and UE connectivity state per access type received from the AMF 120 and the locally configured operator policy. The LMF 116 may also determine the access type for transmission of an LPP message to the UE 112 (e.g. in order to ensure the UE will be in a connected state for the selected positioning access type).

In operation 403a may comprise the UE Assisted and UE Based Positioning procedure.

In operation 403b, may comprise the Network Assisted Positioning procedure. The AMF 120 may forward the Network Positioning message to the NG-RAN based on the received Access Type.

In operation 403c, may comprise the Obtaining Non-UE Associated Network Assistance Data procedure.

In operation 403d may comprise the UE Assisted and UE Based Positioning procedure for interworking with the N3IWF, the TNGF, or the W-AGF (wireline access gateway function)(hereinafter, it may be referred to as the N3IWF/TNGF/W-AGF 410). The location information returned by the UE 112 may include location Information for Non-3GPP Access.

In operation 403e may comprise the Network Assisted Positioning procedure for interworking with the N3IWF/TNGF/W-AGF 410. The Access Type, i.e. non-3GPP access type, may be selected to provide the location information. The AMF 120 may forwards the Network Positioning message to the N3IWF/TNGF/W-AGF 410 based on the received Access Type.

The difference in the UWB implementation may be a function similarly called 'Trusted UWB Interworking Function' may be replacing the term TNGF or N3IWF. This UWB function is likely to be a trusted function, as the service provider of this automated gate solution installs this UWB anchor and only the registered UEs may be able to access this.

In one embodiment, the N3IWF/TNGF/W-AGF function block 410 in Figure 4 may be replaced by a block TUIWF (Trusted UWB Inter-Working Function)(not shown). Another option may be widen the scope of the TNGF and T3IWF to include the UWB access mode in their interworking support.

The LMF 116 may request the TUIWF to derive localization for multiple UEs together. So this interworking capability can achieve the group UE transfer (to UWB) requirement necessary for implementing our solution.

The UEs may then activate their UWB connectivity and connect to the UWB anchor point. As the UWB anchor is also synced to the 5G-NR PSS, SSS signals (section 2), these UEs may easily capture the time synchronisation. There may be few meters of distance gaps amongst the UEs and this may reflect in ns level timing offsets, when the sync on to the UWB anchor. This can be used to good advantage, as detailed in section B.

### B. The staggered simultaneous ranging solution in UWB

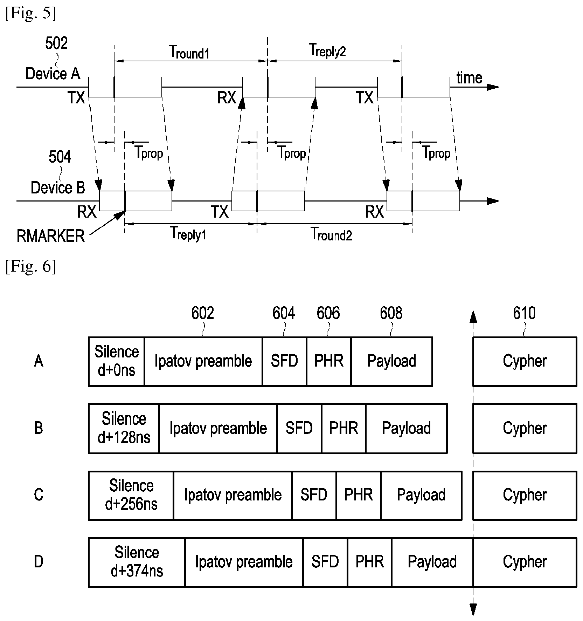

The FiRa UWB ranging solution uses the PHY and MAC layers of the IEEE 802.15.4z standards [4]. This can be done as two-way or one-way ranging (TWR or OWR). The TWR solution nullifies any clock offsets between the UWB anchor and the UWB device, and is depicted in Figure 5.

Figure 5 schematically depicts a method of two-way ranging (from [4]).

Referring to Figure 5, the aim of this UWB ranging is to obtain the propagation delay Tₚᵣₒₚ between the device A 502 and the device B 504 (i.g, one of them may be the UWB anchor) and then translate this to the distance. As the measurement is initiated in both directions, any clock offsets between the device A 502 and the device B 504 is negated in TWR.

In one embodiment, the ranging slots and ranging management slots in UWB are arranged in the time domain and it is critical to use this time resource efficiently. Commercial UWB products (e.g. the device A 502 and/or the device B 504) may use 500 MHz of bandwidth in the unlicensed spectrum bands and there may be other unlicensed wireless technologies operating in this spectrum. Hence the time periods the UWB technology can operate can be controlled, giving it a low duty cycle. In such a scenario, the efficiency of the time resource usage becomes even more critical and techniques to increase this efficiency may become vital.

Figure 6 schematically depicts message formats for staggered simultaneous UWB ranging (from [5]).

Referring to Figure 6, the staggered synchronous ranging solution is proposed by Decawave [5], may be one implementation solution to increase the time resource usage efficiency. Multiple users are subjected to ranging in UWB synchronously, but each user has a fixed time offset from the others. The UWB 802.1.5.4z PHY may use Ipatov sequences (e.g. a Ipatov preamble 602) for ranging as these sequences show perfect periodic autocorrelation properties and very low cross correlation. Thus multiple uses could use the same time resource, but when they are closer together, their auto-correlation peaks can interfere with each other. This may require very long sequences, to narrow the peaks but the time resource is compensated. The solution in [5] is to shift the users by a short offset, so the autocorrelation peaks do not overlap.

In one embodiment, each message may include a Ipatov sequence 602, a start-of-frame delimiter (SFD) 604, a PHY header (PHR) 606, a payload 608, and a ciphered sequence 610. The staggered synchronous ranging solution enables for devices to respond at almost the same time with overlapping frames. Each of the responding devices may have a different delay, but the sequences (e.g. the Ipatov preamble 602) may overlap. The receiver may then lock on to one of the responders and accumulate all the responding ciphers after receiving PHR (e.g. the PHR 606) and data (e.g. the payload 608) from the first one.

The staggered synchronous requirement can be provided by the invention of transferring a group of UEs in synchronisation with the UWB anchor.

### C. Flow chart for the solution

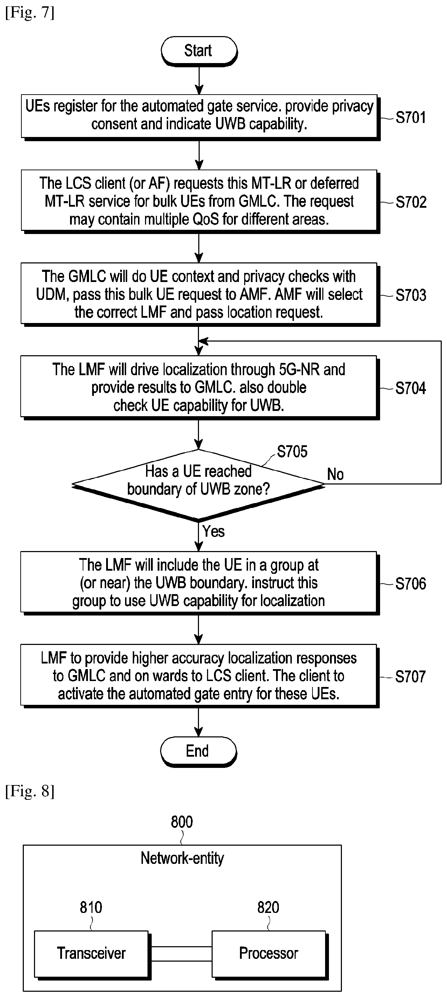

Figure 7 schematically depicts a method according to an exemplary embodiment, particularly showing call flow for the group UE transfer to utilize UWB capability. A flow chart for our group transfer of UEs (e.g. the UE 112) to UWB solution, as executed by the LMF 116 by recognising the UWB capability of the UEs is presented in Figure 7. A similar flow chart (with few modifications) can be derived for the full UWB interworking solution as well.

At the operation S701, UEs (i.e. a set thereof) (e.g. the UE 112) may register for the automated gate service. The UEs (e.g. the UE 112) may provide privacy consent and indicate UWB capability.

At the operation S702, the LCS client 128 (or the AF 130) may request this MT-LR or deferred MT-LR service for bulk UEs from the GMLC 124. The request may contain multiple QoS for different areas.

At the operation S703, the GMLC 124 may do (i.e. performs) context and privacy checks with the UDM 118 and passes this bulk UE request to the AMF 120. The AMF 120 may select (i.e. selects) the correct LMF (e.g. the LMF 116) and pass location request.

At the operation S704, the LMF 116 may drive localization through 5G-NR and provide results to the GMLC 124. The LMF 116 may also double check UE capability for UWB.

At the operation S705, the LMF 116 may check whether the UE 112 has reached a boundary of UWB zone. If no, the flow chart returns to the operation S703. If yes, the flow chart continues to the operation S706.

At the operation S706, the LMF 116 may include (i.e. includes) the UE 112 (i.e. the UE 112 that has reached the boundary of the UWB zone) in a group (i.e. a first subset) at (or near) the UWB boundary. The LMF 116 may instruct this group to use UWB capability for localization.

At the operation S707, the LMF 116 may provide higher accuracy localization response to the GMLC 124 and onwards to the LCS client 128. The LCS client 128 may activate the automated gate entry for these UEs (e.g. the UE 112).

Although a preferred embodiment has been shown and described, it may be appreciated by those skilled in the art that various changes and modifications might be made without departing from the scope of the invention, as defined in the appended claims and as described above.

Figure 8 is a block diagram illustrating a structure of a network entity 800 according to an embodiment of the present disclosure. In one embodiment, the network entity 800 may be represented as at least one of the LMF 120, the GMLC 124 or other network entity illustrated in Figure 1b.

Referring to Figure 8, the network entity 800 may include a transceiver 810 and a processor 820. The transceiver 810 may be configured to transmit and receive messages and signals. The processor 820 may be configured to control the transceiver 810 to manage interworking with the UWB anchor, and localise, via the UWB anchor, a first subset of UEs selected from a set of UEs within the cell. The network entity 800 may be implemented in software, hardware, firmware or a combination thereof.

### References

[1] FiRa (Fine ranging) consortium, https://www.firaconsortium.org/
[2] 3GPP TS 23.273, version 16.3.0, 5G System (5GS) Location Services (LCS); Stage 2, March 2020.
[3] 3GPP TR 37.355, version 16.3.0, LTE Positioning Protocol, Dec. 2020
[4] IEEE 802.15.4z standard, Amendment 1: Enhanced Ultra Wideband (UWB) Physical Layers (PHYs) and Associated Ranging Techniques, 2020.
[5] B. Verso, "HRP UWB PHY enhancements", IEEE Standards Association - Documents," [online], 2018, accessed: 25-Feb.-2019, Available from: http://www.ieee802.org/15/pub/TG4z.html.
[6] 3GPP, "LTE Positioning Protocol (LPP) - (Release 16)," 3rd Generation Partnership Project (3GPP), Technical Specification (TS) 37.355, Dec 2020, section 6.5, Version 16.3.0.

### Notes

Attention is directed to all papers and documents which are filed concurrently with or previous to this specification in connection with this application and which are open to public inspection with this specification, and the contents of all such papers and documents are relevant to the disclosure.

## Claims

1. A method of localising user equipments, UEs (112), by a location management function (116), using an ultra wideband, UWB, anchor located in a cell of a 5G new radio, NR, network, comprising the location management function (116) and a next generation node B, gNB, defining the cell, the method comprising:
managing, by the location management function (116), interworking with the UWB anchor;
getting, by the location management function(116), the UWB anchor synchronized to the gNB;
selecting, by the location management function (116), a first subset of UEs (112); and
controlling, by the location management function (116), the first subset of UEs (112) to localize, via the UWB anchor, within the cell.

2. The method according to claim 1, further comprising:
identifying, by the location management function (116), a second subset of UEs (112) from the first subset of UEs (112); and
localising, by the location management function (116) , the second subset of UEs (112).

3. The method according to claim 1, wherein selecting, by the location management function (116), the first subset of UEs (112) is based, at least in part, on mutual proximity and/or mutual adjacency thereof.

4. The method according to claim 1, wherein controlling, by the location management function (116), the first subset of UEs (112) to localize is performed based on a single broadcast message or multiple unicast messages.

5. The method according to claim 1, comprising requesting, by the location management function (116) to the first subset of UEs (112), to activate UWB localising respectively or via a UWB interworking-function of the location management function (116).

6. The method according to claim 1, wherein controlling the first subset of UEs (112) to localize comprises staggered simultaneous ranging of the selected first subset of UEs (112).

7. The method according to claim 1, wherein interworking with the UWB anchor is performed via a Non-3GPP Interworking Function, N3IWF, a Trusted Non-3GPP Gateway Function, TNGF, or an interworking function for UWB.

8. The method according to claim 1, wherein controlling, by the location management function (116), the first subset of UEs (112) to localize, via the UWB anchor, is performed based on a predetermined location.

9. The method according to claim 1, comprising controlling access at a barrier of the first subset of UEs (112).

10. The method according to claim 1, wherein getting the UWB anchor synchronized to the gNB with a gNB clock thereof through off an air alignment to 5G-NR primary synchronization signal, PSS, and/or secondary synchronization signal, SSS.

11. An apparatus of a location management function (116) for localizing user equipments, UEs (112), using an ultra wideband, UWB, anchor located in a cell of a 5G new radio, NR, network comprising the location management function(116) and a next generation node B, gNB, defining the cell, the apparatus comprising;
a transceiver; and
a processor coupled with the transceiver,
wherein the processor is configured to:
manage interworking with the UWB anchor,
get the UWB anchor synchronized to the gNB,
select a first subset of UEs (112), and
control the first subset of UEs (112) to localize, via the UWB anchor, within the cell.

12. The apparatus according to claim 11, wherein the processor is configured to:
identify a second subset of UEs (112) from the first subset of UEs (112) and,
localize the second subset of UEs (112).

13. The apparatus according to claim 11, wherein the processor is configured to select the first subset of UEs (112) is based, at least in part, on mutual proximity and/or mutual adjacency thereof.

14. The apparatus according to claim 11, wherein the processor is configured to control the first subset of UEs (112) to localized is performed based on a single broadcast message or multiple unicast messages.

15. The apparatus according to claim 11, wherein the processor is configured to request to the first subset of UEs (112), to activate UWB localising respectively or via a UWB interworking-function of the location management function (116).

## Patentansprüche

1. Verfahren zum Lokalisieren von Benutzergeräten, UEs, (112) durch eine Standortverwaltungsfunktion (116) unter Verwendung eines Ultrabreitband-, UWB, -Ankers, der sich in einer Zelle eines 5G-New-Radio-, NR, -Netzes befindet, das die Standortverwaltungsfunktion (116) und einen Node B der nächsten Generation, gNB, umfasst, der die Zelle definiert, wobei das Verfahren Folgendes umfasst:
Verwalten, durch die Standortverwaltungsfunktion (116), der Zusammenarbeit mit dem UWB-Anker;
Veranlassen, durch die Standortverwaltungsfunktion (116), des Synchronisierens des UWB-Ankers mit dem gNB;
Auswählen, durch die Standortverwaltungsfunktion (116), einer ersten Teilmenge von UEs (112); und
Steuern, durch die Standortverwaltungsfunktion (116), der ersten Teilmenge von UEs (112), sodass sie sich über den UWB-Anker innerhalb der Zelle lokalisiert.

2. Verfahren nach Anspruch 1, ferner umfassend:
Identifizieren, durch die Standortverwaltungsfunktion (116), einer zweiten Teilmenge von UEs (112) aus der ersten Teilmenge von UEs (112); und
Lokalisieren, durch die Standortverwaltungsfunktion (116), der zweiten Teilmenge von UEs (112).

3. Verfahren nach Anspruch 1, wobei das Auswählen, durch die Standortverwaltungsfunktion (116), der ersten Teilmenge von UEs (112) zumindest teilweise auf deren gegenseitiger Nähe und/oder gegenseitiger Nachbarschaft basiert.

4. Verfahren nach Anspruch 1, wobei das Steuern, durch die Standortverwaltungsfunktion (116), der ersten Teilmenge von UEs (112) zum Lokalisieren basierend auf einer einzelnen Broadcast-Nachricht oder mehreren Unicast-Nachrichten durchgeführt wird.

5. Verfahren nach Anspruch 1, umfassend Anfordern, durch die Standortverwaltungsfunktion (116) gegenüber der ersten Teilmenge von UEs (112), des Aktivierens der UWB-Lokalisierung einzeln oder über eine UWB-Zusammenarbeitsfunktion der Standortverwaltungsfunktion (116).

6. Verfahren nach Anspruch 1, wobei das Steuern der ersten Teilmenge von UEs (112) zum Lokalisieren eine gestaffelte simultane Entfernungsmessung der ausgewählten ersten Teilmenge von UEs (112) umfasst.

7. Verfahren nach Anspruch 1, wobei die Zusammenarbeit mit dem UWB-Anker über eine Nicht-3GPP-Zusammenarbeitsfunktion, N3IWF, eine vertrauenswürdige Nicht-3GPP-Gateway-Funktion, TNGF, oder eine Zusammenarbeitsfunktion für UWB durchgeführt wird.

8. Verfahren nach Anspruch 1, wobei das Steuern, durch die Standortverwaltungsfunktion (116), der ersten Teilmenge von UEs (112) zum Lokalisieren über den UWB-Anker basierend auf einem vorbestimmten Standort durchgeführt wird.

9. Verfahren nach Anspruch 1, umfassend Steuern des Zugriffs an einer Barriere der ersten Teilmenge von UEs (112).

10. Verfahren nach Anspruch 1, wobei das Veranlassen des Synchronisierens des UWB-Ankers mit dem gNB durch einem gNB-Takt davon durch eine Luftausrichtung mit einem primären Synchronisationssignal, PSS, und/oder einem sekundären Synchronisationssignal, SSS, für 5G-NR.

11. Vorrichtung einer Standortverwaltungsfunktion (116) zum Lokalisieren von Benutzergeräten, UEs, (112) unter Verwendung eines Ultrabreitband-, UWB, -Ankers, der sich in einer Zelle eines 5G-New-Radio-, NR, -Netzes befindet, das die Standortverwaltungsfunktion (116) und einen Node B der nächsten Generation, gNB, umfasst, der die Zelle definiert, wobei die Vorrichtung Folgendes umfasst:
einen Sendeempfänger; und
einen Prozessor, der mit dem Sendeempfänger gekoppelt ist,
wobei der Prozessor konfiguriert ist zum:
Verwalten der Zusammenarbeit mit dem UWB-Anker,
Veranlassen des Synchronisierens des UWB-Ankers mit dem gNB,
Auswählen einer ersten Teilmenge von UEs (112), und
Steuern der ersten Teilmenge von UEs (112), sodass sie sich über den UWB-Anker innerhalb der Zelle lokalisiert.

12. Vorrichtung nach Anspruch 11, wobei der Prozessor konfiguriert ist zum:
Identifizieren einer zweiten Teilmenge von UEs (112) aus der ersten Teilmenge von UEs (112) und,
Lokalisieren der zweiten Teilmenge von UEs (112).

13. Vorrichtung nach Anspruch 11, wobei der Prozessor so konfiguriert ist, dass er die erste Teilmenge von UEs (112) zumindest teilweise basierend auf deren gegenseitiger Nähe und/oder gegenseitiger Nachbarschaft auswählt.

14. Vorrichtung nach Anspruch 11, wobei der Prozessor so konfiguriert ist, dass er das Steuern der ersten Teilmenge von UEs (112) zum Lokalisieren basierend auf einer einzelnen Broadcast-Nachricht oder mehreren Unicast-Nachrichten durchführt.

15. Vorrichtung nach Anspruch 11, wobei der Prozessor so konfiguriert ist, dass er das Aktivieren der UWB-Lokalisierung einzeln oder über eine UWB-Zusammenarbeitsfunktion der Standortverwaltungsfunktion (116) gegenüber der ersten Teilmenge von UEs (112) anfordert.

## Revendications

1. Procédé de localisation d'équipements utilisateurs, UE (112), par une fonction de gestion de localisation (116), utilisant un point d'ancrage à bande ultra-large, UWB, situé dans une cellule d'un réseau 5G nouveau radio, NR, comprenant la fonction de gestion de localisation (116) et un nœud B de prochaine génération, gNB, définissant la cellule, le procédé comprenant :
gérer, par la fonction de gestion de localisation (116), l'interfonctionnement avec le point d'ancrage UWB ;
obtenir, via la fonction de gestion de localisation (116), le point d'ancrage UWB synchronisé avec le gNB ;
sélectionner, par la fonction de gestion de localisation (116), un premier sous-ensemble d'UE (112) ; et
commander, par l'intermédiaire de la fonction de gestion de localisation (116), la localisation, au sein de la cellule, du premier sous-ensemble d'UE (112) via l'ancrage UWB.

2. Procédé selon la revendication 1, comprenant en outre :
identifier, par la fonction de gestion de localisation (116), un deuxième sous-ensemble d'UE (112) à partir du premier sous-ensemble d'UE (112) ; et
localiser, par la fonction de gestion de localisation (116), le deuxième sous-ensemble d'UE (112).

3. Procédé selon la revendication 1, dans lequel la sélection, par la fonction de gestion de localisation (116), du premier sous-ensemble d'UE (112) est basée, au moins en partie, sur leur proximité mutuelle et/ou leur adjacence mutuelle.

4. Procédé selon la revendication 1, dans lequel la gestion, par la fonction de gestion de localisation (116), du premier sous-ensemble d'UE (112) à localiser s'effectue en se basant sur un seul message de diffusion ou sur plusieurs messages en monodiffusion.

5. Procédé selon la revendication 1, comprenant la demande, par la fonction de gestion de localisation (116) adressée au premier sous-ensemble d'UE (112), d'activer la localisation UWB respectivement ou par l'intermédiaire d'une fonction d'interfonctionnement UWB de la fonction de gestion de localisation (116).

6. Procédé selon la revendication 1, dans lequel la commande du premier sous-ensemble d'UE (112) à localiser comprend une mesure de distance simultanée échelonnée du premier sous-ensemble sélectionné d'UE (112).

7. Procédé selon la revendication 1, dans lequel l'interfonctionnement avec l'ancrage UWB est assuré par une fonction d'interfonctionnement non-3GPP, N3IWF, une fonction de passerelle de confiance non-3GPP, TNGF, ou une fonction d'interfonctionnement pour l'UWB.

8. Procédé selon la revendication 1, dans lequel la gestion, par la fonction de gestion de localisation (116), du premier sous-ensemble d'UE (112) à localiser via l'ancrage UWB s'effectue en se basant sur une localisation prédéterminée.

9. Procédé selon la revendication 1, comprenant la commande de l'accès à une barrière du premier sous-ensemble d'UE (112).

10. Procédé selon la revendication 1, dans lequel la synchronisation de l'ancrage UWB avec le gNB s'effectue à l'aide d'un horloge de ce dernier, par le biais d'un alignement sans fil sur le signal de synchronisation primaire, PSS, et/ou le signal de synchronisation secondaire, SSS, de 5G-NR.

11. Dispositif de gestion de localisation (116) destiné à localiser des équipements utilisateurs, UE (112), en utilisant un point d'ancrage à bande ultra-large, UWB, situé dans une cellule d'un réseau 5G nouveau radio, NR, comprenant la fonction de gestion de localisation (116) et un nœud B de prochaine elle génération, gNB, définissant la cellule, le dispositif comprenant :
un émetteur-récepteur ; et
un processeur couplé à l'émetteur-récepteur,
dans lequel le processeur est configuré pour :
gérer l'interfonctionnement avec l'ancrage UWB,
synchroniser l'ancrage UWB avec le gNB,
sélectionner un premier sous-ensemble d'UE (112), et
commander le premier sous-ensemble d'UE (112) à localiser, via l'ancrage UWB, au sein de la cellule.

12. Dispositif selon la revendication 11, dans lequel le processeur est configuré pour :
identifier un deuxième sous-ensemble d'UE (112) à partir du premier sous-ensemble d'UE (112) et,
localiser le deuxième sous-ensemble d'UE (112).

13. Dispositif selon la revendication 11, dans lequel le processeur est configuré pour sélectionner le premier sous-ensemble d'UE (112) en se basant, au moins en partie, sur leur proximité mutuelle et/ou leur adjacence mutuelle.

14. Dispositif selon la revendication 11, dans lequel le processeur est configuré pour commander le premier sous-ensemble d'UE (112) de manière à ce que la localisation soit effectuée en se basant sur un seul message de diffusion ou sur plusieurs messages en monodiffusion.

15. Dispositif selon la revendication 11, dans lequel le processeur est configuré pour demander au premier sous-ensemble d'UE (112) d'activer la localisation UWB respectivement ou via une fonction d'interfonctionnement UWB de la fonction de gestion de localisation (116).
